# EUROPEAN PATENT APPLICATION

(11) **EP 3 098 576 A1**
(43) Date of publication of application: **30.11.2016**
(21) Application number: 15169777.8
(22) Date of filing: 29.05.2015
(51) Int. Cl.: G01F 23/16, G01N 1/22

(54) **GAS SENSING AND LIQUID LEVEL GAUGING IN A TANK OF A VESSEL**

(71) Applicant: Consilium AB, 131 05 Nacka (SE)
(72) Inventor: Bergström, Nicklas, 131 05 Nacka (SE); Nordberg, Gideon, 131 05 Nacka (SE); Hagberg, Martin, 131 05 Nacka (SE)
(74) Representative: Awapatent AB

(57) **Abstract**

According an aspect, a system (100) for gas sensing and liquid level gauging for a tank (105) of a vessel is provided. The system comprises a conduit (103) having at least one opening (104) arranged in the tank and a liquid level gauging equipment (102) arranged to, when the system is in a liquid level gauging mode, fill the conduit with a gaseous media and determine a parameter indicating a pressure in the gaseous media in the conduit. The system further comrpises a gas sensing equipment (102) arranged to, when the system is in a gas sensing mode, obtain a gas sample from the tank via the conduit and to sense at least one predetermined gas in the gas sample.

## Description

### Field of the invention

The present invention generally relates to the field of liquid level gauging in vessel tanks. Further, the present invention also relates to the field of gas sensing in vessel tanks.

### Background of the invention

For measuring liquid levels in tanks of vessels (such as ballast tanks or fuel tanks) equipment applying the so called bubble principle is normally used. Pressurized gaseous media (such as air) is blown through a conduit having an opening close to the bottom of the tank. The pressure of the gaseous media in the conduit is proportional to the liquid level as measured from the opening of the conduit. It is advantageous to use the bubble principle in vessel tanks since the only part of the equipment for measuring the liquid level that has to be present in the liquid is the conduit. Sensors and other sensitive parts of the equipment may thus be kept out of the liquid and be positioned outside the tank, whereby a more robust liquid level gauging equipment is provided.

Gas sensing equipment is used in order to detect hazardous gases in vessel tanks. A sample of gas present in the tank is collected and analyzed in order to detect one or more predetermined gases. Currently, liquid level gauging and gas sensing in vessel tanks are performed by completely separate devices.

### Summary of the invention

It would be advantageous to achieve an improved system and method for gas sensing and liquid level gauging for a tank of a vessel. In particular, it would be desirable to enable a less complex system and method for gas sensing and liquid level gauging for a tank of a vessel.

To better address one or more of these concerns, a system and a method having the features defined in the independent claims are provided. Preferable embodiments are defined in the dependent claims.

Hence, according to a first aspect, a system for gas sensing and liquid level gauging for a tank of a vessel is provided. The system comprises a conduit having at least one opening arranged in the tank and a liquid level gauging equipment arranged to, when the system is in a liquid level gauging mode, fill the conduit with a gaseous media and determine a parameter indicating a pressure in the gaseous media in the conduit. The system further comrpises a gas sensing equipment arranged to, when the system is in a gas sensing mode, obtain a gas sample from the tank via the conduit and to sense at least one predetermined gas in the gas sample.

According to a second aspect, a method of gas sensing and liquid level gauging for a tank of a vessel is provided. The method comprises filling a conduit with a gaseous media, the conduit having at least one opening arranged in the tank, determining a parameter indicating a pressure in the gaseous media in the conduit, obtaining a gas sample from the tank via the conduit, and sensing at least one predetermined gas in the gas sample.

The present aspects are based on an idea of integrating liquid level gauging and gas sensing in the same system by utilizing the same conduit for performing the operations necessary for liquid level gauging and gas sensing, respectively. Hence, the one and the same conduit is used both to be filled with gaseous media (such as in the liquid level gauging mode) and for collecting the gas sample (such as in the gas sensing mode). As merely a single conduit is needed, the system and method are less complex and thereby improved.

The liquid level gauging equipment may operate according to the bubble principle. Hence, any sensitive devices of the liquid level gauging equipment may be positioned away from the liquid outside the tank.

The tank of the vessel may be e.g. a ballast tank, wherein the liquid is typically water, a fuel tank, wherein the liquid is typically fuel, or any other type of vessel tank, in which it is of interest to gauge a liquid level as well as detect a particular gas.

According to an embodiment, the system may comprise means arranged to obtain information indicative of whether to operate the system in the liquid level gauging mode or in the gas sensing mode. The system may then be operated accordingly.

Further, according to an embodiment of the second aspect, the method may comprise obtaining information indicative of whether to operate in a liquid level gauging mode or in a gas sensing mode. The filling of the conduit with the gaseous media and the determining of a parameter indicating the pressure in the gaseous media in the conduit may be performed (optionally only) if the information indicates operation in the liquid level gauging mode. Further, the obtaining of the gas sample and the sensing of the at least one predetermined gas may be performed (optionally only) if the information indicates operation in the gas sensing mode.

With the present embodiments, the risk of operating the system in the wrong mode (or performing the steps of the method at the wrong moment) is reduced. Trying to obtain a gas sample via the conduit when the tank is filled with liquid may damage the gas sensing equipment since liquid may be sucked into the conduit and reach sensitive parts of the gas sensing equipment.

For example, the means (arranged to obtain information indicative of whether to operate the system in the liquid level gauging mode or in the gas sensing mode) may be arranged to receive an indication of when the liquid level in the tank falls below a threshold, the indication being based on the parameter determined by the liquid level gauging equipment. Further, the means may be arranged to initiate operation of the system in the gas sensing mode a certain time period after the point in time when the liquid level in the tank falls below the threshold.

Further, according to an embodiment of the second aspect, the method may comprise receiving an indication of when the liquid level in the tank falls below a threshold, the indication being based on the determined parameter indicating a pressure in the gaseous media in the conduit, and initiating operation in the gas sensing mode a certain time period after the point in time when the liquid level in the tank falls below the threshold.

Hence, when the tank is being emptied, information related to the liquid level gauging may be utilized to detect when the liquid level falls below a threshold (preferably relatively close to the opening of the conduit). It is then assumed that after a specific time period, the liquid level has fallen further below the opening of the conduit, whereby operation in the gas sensing mode may be initiated with a reduced risk of liquid being sucked into the conduit. The present embodiments are advantageous in that the information indicative of whether to operate the system in the liquid level gauging mode or in the gas sensing mode may be obtained without further devices, such as sensors. Instead, the liquid level gauging equipment may be utilized to obtain such information. Hence, a less complex system is provided.

According to an embodiement, the means (arranged to obtain information indicative of whether to operate the system in the liquid level gauging mode or in the gas sensing mode) may be arranged to receive information indicating that filling of the tank with liquid has started, and to initiate operation of the system in the liquid level gauging mode and/or disable operation of the system in the gas sensing mode based on the received information indicating that filling of the tank with liquid has started.

Further, according to an embodiment of the second aspect, the method may comprise receiving information indicating that filling of the tank with liquid has started, and initiating operation in the liquid level gauging mode and/or disable operation in the gas sensing mode based on the received information indicating that filling of the tank with liquid has started.

Hence, the information indicating that filling of the tank with liquid has started may indicate whether to operate the system in the liquid level gauging mode or in the gas sensing mode. Thus, such information may be obtained without further devices such as sensors, whereby a less complex system is provided.

Alternatively (or as a complement), the means (arranged to obtain information indicative of whether to operate the system in the liquid level gauging mode or in the gas sensing mode) may comprise a liquid sensor arranged at a similar level above the bottom of the tank as the opening of the conduit. Thus, the liquid sensor may detect when the liquid level falls below or goes above the opening of the conduit, thereby indicating wether to initiate operation in the gas seninsing mode or in the liquid level gauging mode, respectively. The present embodiment is advantageous in that the indication of wether the liquid level is below or above the opening of the conduit may be more accurate.

According to an embodiment, the system may further comprise at least one computing module configured to determine a liquid level in the tank based on the parameter determined by the liquid level gauging equipment, and determine if the at least one predetermined gas is present in the tank based on the sensed at least one predetermined gas. The at least one computing module may e.g. be comprised in a control unit of the system. Optionally, the system may comprise one computing module in communication with the liquid level gauging equipment and being dedicated to determine the liquid level, and another computing module in communication with the gas sensing equipment and being dedicated to determine the if the at least one predetermined gas is present in the tank. Alternatively, the one and the same computing module may be adapted for both determining the liquid level and if the at least one predetermined gas is present in the tank.

Further, according to an embodiment of the second aspect, the method may comprise determining a liquid level in the tank based on the determined parameter indicating the pressure in the gaseous media in the conduit, and determining if the at least one predetermined gas is present in the tank based on the sensed at least one predetermined gas.

According to an embodiment, an opening of the conduit may be arranged between 1 and 60 cm, preferably between 10 and 40 cm, such as around 20 to 25 cm from a bottom of the tank. The present embodiment provides a distance between the or each opening of the conduit and the bottom of the tank suitable both for liquid level gauging and gas sensing.

According to an embodiment, the conduit may be branched, each branch having an opening arranged in the tank. Hence, several measuring points may be provided in the same tank. The branches are gathered to a common portion of the conduit, through which the gas sample is conducted to the gas sensing equipment and through which the gaseous media is conducted from the liquid level gauging equipment.

According to an embodiment, the openings of the branched conduit may be arranged on different distances from the bottom of the tank. Thus, the height of the openings of the branches above the bottom of the tank may be adapted for different purposes.

According to an embodiment, at least one of the branches may be filled with gaseous media in the liquid level gauging mode and the other branch, or at least one of the other branches, may be used for obtaining the gas sample in the gas sensing mode. For example, the height of the opening of the gas sensing branch may be arranged on a certain distance from the bottom while the height of the opening of the liquid level gauging branch may be arranged on another distance from the bottom of the tank. Hence, the distances between the openings of the branches and the bottom of the tank may be adapted to certain requirements for gas sensing and liquid level gauging, respectively.

It is noted that embodiments of the invention relates to all possible combinations of features recited in the claims. Further, it will be appreciated that the various embodiments described for the system are all combinable with the method as defined in accordance with the second aspect of the present invention.

### Brief description of the drawings

These and other aspects will now be described in more detail in the following illustrative and non-limiting detailed description of embodiments, with reference to the appended drawings.
Figure 1 shows a system according to an embodiment.
Figure 2 shows a system according to another embodiment.
Figure 3 shows a method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description of embodiments

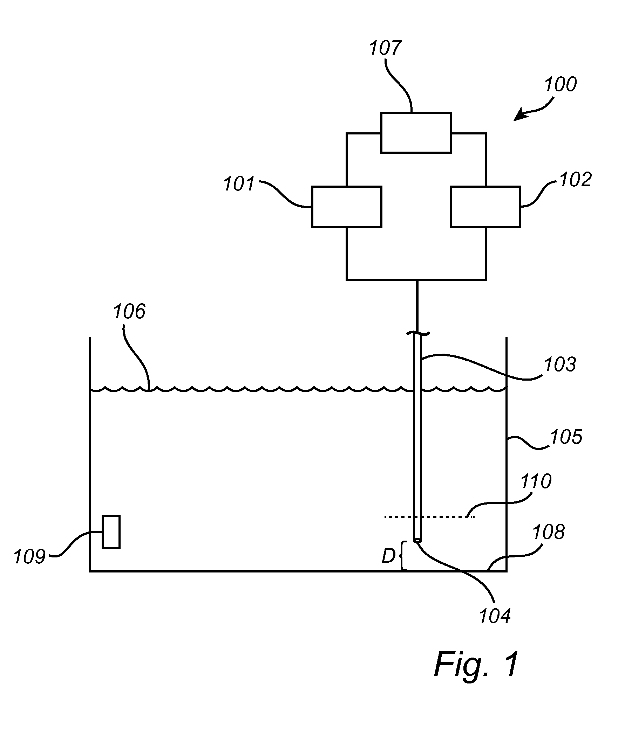

A system 100 for gas sensing and liquid level gauging for a tank 105 of a vessel according to an embodiment will be described with reference to Figure 1. The tank 105 may e.g. be a ballast tank or a fuel tank of the vessel or any other type of vessel tank that, at least from time to time, holds some type of liquid 106, such as water or fuel. The system 100 comprises a gas sensing equipment 101 and a liquid level gauging equipment 102, both being in selective fluid communication with a conduit 103 of the system 100. Hence, the one and the same conduit 103 is used both for liquid level gauging and for gas sensing. The gas sensing equipment 101 and the liquid level gauging equipment 102 may be in communication with at least one computing module 107 of the system 100. It will be appreciated that the at least one computing module 107 may form part of the liquid level gauging equipment 102 and the gas sensing equipment 101 or be comprised in a separate unit. Optionally, parts of the gas sensing equipment 101 and the liquid level gauging equipment 102 and/or the computing module 107 may be included in a control unit of the system 100.

The conduit 103 (which alternately may be referred to as a pipe) has an opening 104 arranged in the tank 105, preferably relatively close to the bottom 108 of the tank 105. The distance D between the opening 104 of the conduit 103 and the bottom 108 of the tank 105 may be comprised within the range of 1 to 60 cm, preferably 10 to 40 cm, such as 20 to 25 cm.

The system 100 may be set to operate in a liquid level gauging mode or in a gas sensing mode. The switching between the two operating modes may be performed manually or automatically. In the liquid level gauging mode, the liquid level gauging equipment 102 fills the conduit 103 with a gaseous media, such as air, preferably such that the gaseous media bubbles out from the opening 104 of the conduit 103. Then, a parameter indicating a pressure in the gaseous media in the conduit 103 is determined. The parameter indicating the pressure may then be communicated to the computing module 107, which may estimate a liquid level in the tank based on the parameter indicating the pressure. The detected pressure is proportional to the liquid level measured from the opening 104 of the conduit 103. In the gas sensing mode, the gas sensing equipment 101 collects a gas sample from the tank 105 via the conduit 103, such as by sucking in gas via the conduit 103 to the gas sensing equipment 101. Then, at least one predetermined gas in the gas sample is sensed by the gas sensing equipment 101. A parameter indicating a result of the gas sensing is then communicated to the computing module 107. The computing module 107 may determine if a critical amount of the at least one predetermined gas is present in the tank based on the parameter communicated from the gas sensing equipment 101. Gases that may be desired to detect in marine tanks are e.g. hydro carbons and hydrogen sulfide.

Preferably, the system 100 may be operated in the gas sensing mode only when the tank 105 is at least almost empty on liquid 106, or at least only when the liquid level is below the opening 104 of the conduit 103, so as to avoid damage of the gas sensing equipment 101 that may be caused by liquid being accidentally sucked up via the conduit 103 to sensitive parts of the gas sensing equipment 101. Further, the system 100 may be operated in the liquid level gauging mode only when the liquid level is above the opening 104 of the conduit 103 so as to avoid unnecessary use of the liquid level gauging equipment 102.

In an embodiment, the system 100 may comprise means for obtaining information indicative of whether to operate the system in the liquid level gauging mode or in the gas sensing mode. The means may be arranged to provide information that can be used for making an estimation of whether the liquid level in the tank 105 is below or above the opening 104 of the conduit 103. For example, the means may comprise a liquid sensor 109 positioned at a similar level above the bottom of the tank as the opening 104 of the conduit 103.

Alternatively, the means may be arranged to receive an indication of when the liquid level in the tank 105 falls below a threshold 110, preferably located slightly (such as several centimeters, e.g. around 20 cm) above the opening 104 of the conduit 103. This indication may be based on the pressure parameter determined by the liquid level gauging equipment 102. Further, the means may be arranged to initiate operation of the system 100 in the gas sensing mode a certain time period (such as a few minutes) after the point in time when the liquid level in the tank 105 falls below the threshold. Hence, it is assumed that the tank 105 continues to be emptied after the liquid level has passed the threshold 110 and that the liquid level has reached below the opening 104 of the conduit 103 after a certain time period. Optionally, the liquid level gauging equipment 102 (or the computing module 107) may provide the means with information related to the liquid level continuously, whereby the means may estimate at which rate the liquid level is sinking and set the certain time period based on that rate. The means may further be arranged to receive information indicating that filling of the tank 105 with liquid 106 has started. Such information may e.g. be obtained from valves controlling filling of the tank 105 with liquid 106. Further, initiating operation of the system 100 in the liquid level gauging mode and/or disabling operation of the system in the gas sensing mode may be made based on the received information indicating that filling of the tank 105 with liquid 106 has started. In the present example, the computing module 107 may provide the above described means.

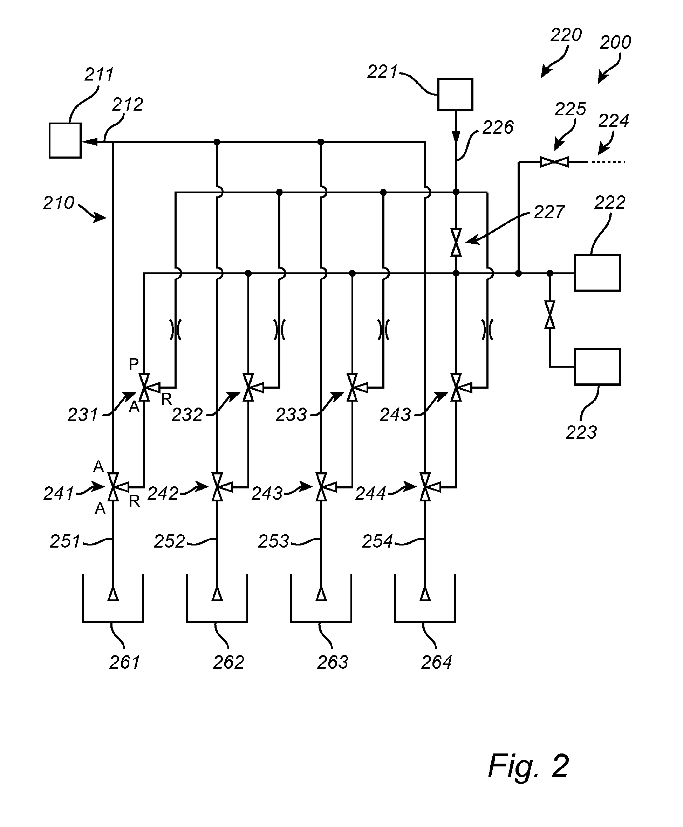

A system 200 according to another embodiment will be described in more detail with reference to Figure 2. The system 200 may in general be similarly configured as the system described with reference to Figure 1.

In the present embodiment, the system 200 may be arranged to detect liquid levels and gas in several tanks, such as four tanks 261, 262, 263, 264. It will be appreciated that the system 200 may be arranged to detect liquid levels and gas in any number of tanks.

In each tank 261, 262, 263, 264, a conduit 251, 252, 253, 254 may be arranged. The gas sensing equipment 210 of the system 200 may comprise piping 212 fluidly connecting a gas sampling module 211 with each conduit 251, 252, 253, 254. The gas sampling module 211 may include a gas sensing instrument and a vacuum pump for sucking gas via the piping 212 and the conduits 251, 252, 253, 254 to the gas sensing instrument. The gas sampling module 211 may further be in communication with the computing module of the system 200 (not shown).

The liquid level gauging equipment 220 may comprise piping 226 fluidly connecting a pressurized gaseous media source 221, such as a compressor, with each conduit 251, 252, 253, 254. The piping 226 of the liquid level gauging equipment 220 may further be fluidly connected to one or more pressure transmitters 222, 223 adapted to detect a parameter indicative of the pressure in each conduit 251, 252, 253, 254. For example, the liquid level gauging equipment 220 may comprise one high level pressure transmitter 222 for detecting pressure within the range of 0 to 3,5 bar, and optionally one low level pressure transmitter 223 for detecting pressure within the range of 0 to 300 mbar. Hence, the high level pressure transmitter 222 is suitable for gauging relatively high liquid levels, while the low level pressure transmitter 223 may obtain a higher accuracy when gauging relatively low liquid levels. Further, the piping 226 of liquid level gauging equipment 220 may be in selective fluid communication via a calibration valve 225 with a reference pressure, such as the pressure of the atmosphere 224. A central valve 227 may be arranged to control the fluid communication from the pressurized gaseous media source 221 to the conduits 251, 252, 253, 254, the one or more pressure transmitters 222, 223 and the reference pressure.

First valves 241, 242, 243, 244 may be arranged so as to selectively set each conduit 251, 252, 253, 254 in fluid communication with either the gas sensing equipment 210 or the liquid level gauging equipment 220. Further, second valves 231, 232, 233, 234 may be arranged to selectively set the pressurized gaseous media source 221 in communication with each conduit 251, 252, 253, 254 or the atmosphere 224.

In the following, operation of the system 200 according to an embodiment will be described. Reference will be made to a first one 261 of the tanks 261, 262, 263, 264 and the corresponding conduit 251 and valves 241, 231. However, it will be appreciated that the system 200 may operate similarly for the rest of the tanks 262, 263, 264.

In the gas sensing mode, the first valve 241 is open between A/A and closed between A/R so as to enable fluid communication between the gas sensing equipment 210 and the conduit 251 (in particular, between the gas sampling module 211 and the conduit 251 via the piping 212), and disable fluid communication between the liquid level gauging equipment 220 and the conduit 251. The vacuum pump of the gas sampling module 211 obtains a gas sample from the tank 251 to the gas sensing instrument by sucking gas via the conduit 251. The gas sample is then sensed by the gas sensing instrument and a parameter indicative of the sensing is communicated to the computing module, which in turn determines if a critical amount of the target gas is present in the tank 261.

In the liquid level gauging mode, the first valve 241 is open between A/R and closed between A/A so as to enable fluid communication between the conduit 251 and the liquid level gauging equipment 220, and disable fluid communication between the gas sensing equipment 210 and the conduit 251. Further, the second valve 231 is first open between A/R and closed between A/P, wherein pressurized gaseous media is provided from the pressurized gaseous media source 221 to the conduit 251 (preferably such that the gaseous media bubbles out of the conduit 251), via the opened central valve 227, and fluid communication is disabled between the pressurized gaseous media source 221 and the pressure transmitters 222, 223. The second valve 231 is then closed between A/R, whereby the pressure is stabilized in the conduit 251 (A/P is still closed). Alternatively, the central valve 227 may be closed so as to centrally stabilize the pressure. Subsequently, the second valve 231 is opened between A/P (A/R is still closed) so as to enable fluid communication between at least one of the transmitters 222, 223 and the conduit 251. A parameter of the pressure in the conduit 251 is then determined by the at least one of the transmitters 222, 223 and communicated further to the computing module of the system 200. The computing module may then estimate the liquid level in the tank 261 based on the parameter.

Optionally, the system 200 may further be operated in a calibration mode. The second valve 231 may then be open between P/R and closed between A/R (liquid level gauging may be inactivated), and the calibration valve 225 may be open so as to enable calibration of the pressure transmitters 222, 223 to the pressure of the atmosphere 224.

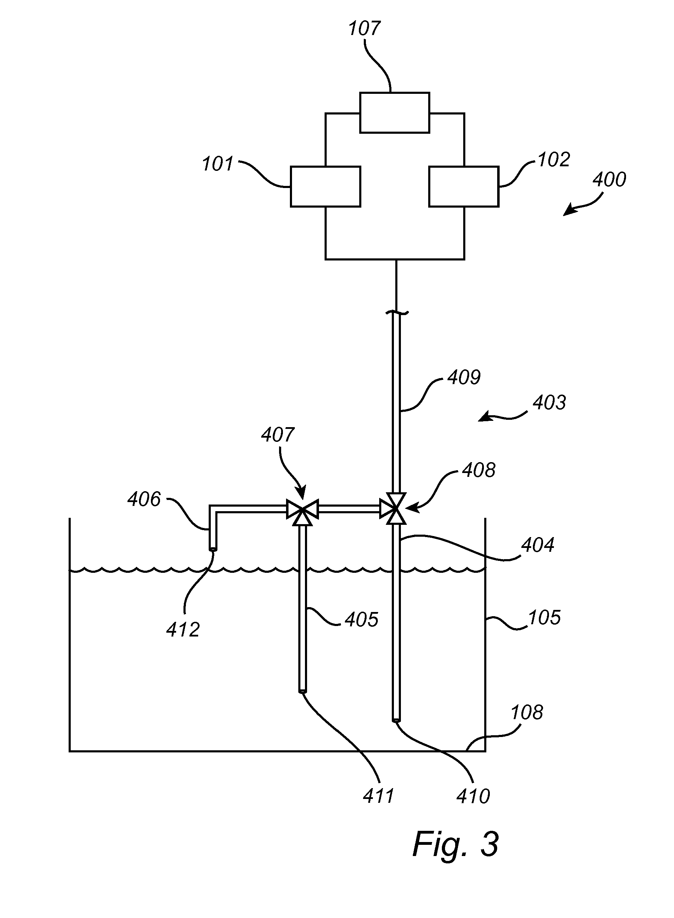

According to an embodiment, the conduit 403 may be branched, as illustrated in Figure 3. In the present example, the conduit 403 comprises three branches 404, 405, 406. The branches 404, 405, 406 may be in fluid connection with a common portion 409 of the conduit 403, which in turn may be in fluid connection with the liquid level gauging equipment 102 and the gas sensing equipment 101. One or more valves 407, 408 may be arranged to control the fluid connection between each branch 404, 405, 406 and the common portion 409 of the conduit 403. Each branch 404, 405, 406 has an opening 410,411,412 arranged in the tank 105. The openings 410, 411, 412 may be arranged on different distances from the bottom 108 of the tank 105. Different requirements on the distance between the opening of the conduit may apply for gas sensing and liquid level gauging, respectively. In the present example, the opening 410 of a first one 404 of the branches is arranged relatively close to the bottom 108 of the tank 105, such as around 10 cm above the bottom 108 of the tank 105, and may thereby be adapted for liquid level gauging. Further, the opening 411 of a second one 405 of the branches may be arranged a bit further from the bottom 108 of the tank 105, such as around 50 cm above the bottom 108 of the tank 105, and may thereby be adapted for gas sensing. The opening 412 of a third one 406 of the branches may be arranged in an upper portion of the tank 105, such as above the highest allowed liquid level, and may thereby be adapted for gas sensing. The valves 407, 408 may be operated such that, in the liquid level gauging mode, the first branch 404 is in fluid connection with the common portion 409 of the conduit 403 and the second branch 405, and optionally the third branch 405, are not in fluid communication with the common portion 409 of the conduit 403. Further, the valves 407, 408 may be operated such that, in the gas sensing mode, the first branch 404 is not in fluid connection with the common portion 409 of the conduit 403 and the second branch 405, and optionally the third branch 405, are in fluid communication with the common portion 409 of the conduit 403. Hence, different branches 404, 405, 406 may be used in different operation modes.

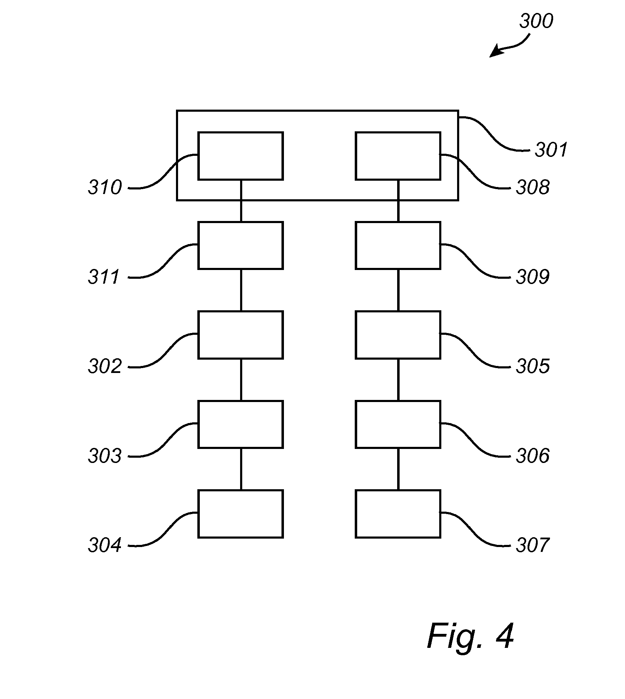

A method 300 of liquid level gauging and gas sensing according to an embodiment will be described with reference to Figure 4. The method 300 may e.g. be performed by a system as described with reference to any one of Figures 1 to 3.

The method 300 may comprise obtaining 301 information indicative of whether to operate in a liquid level gauging mode or in a gas sensing mode. If the information indicates operation in the liquid level gauging mode, a conduit is filled 302 with a gaseous media, the conduit having at least one opening arranged in the tank. A parameter indicating a pressure in the gaseous media in the conduit is then determined 303. The method 300 may then comprise determining 304 a liquid level in the tank based on the determined parameter indicating the pressure in the gaseous media in the conduit. If the information indicates operation in the gas sensing mode, a gas sample is obtained 305 from the tank via the conduit, and at least one predetermined gas is sensed 306 in the gas sample. The method 300 may then comprise determining 307 if the at least one predetermined gas is present in the tank based on the sensed at least one predetermined gas.

For example, the obtaining 301 of the information may comprise receiving 308 an indication of when the liquid level in the tank falls below a threshold, the indication being based on the determined parameter indicating a pressure in the gaseous media in the conduit. Further, operation in the gas sensing mode may be initiated 309 a certain time period after the point in time when the liquid level in the tank falls below the threshold. The obtaining 301 of the information may further comprise receiving 310 information indicating that filling of the tank with liquid has started. Operation in the liquid level gauging mode may then be initiated 311 and/or operation in the gas sensing mode may be disabled based on the received information indicating that filling of the tank with liquid has started.

Alternatively, the information may be obtained from a liquid sensor positioned at or close to the same level as the opening of the conduit.

It will be appreciated that the embodiments related to the system as described with reference to Figures 1 to 3 are all combinable with the embodiments of the method as described with reference to Figure 4.

The person skilled in the art realizes that the present invention by no means is limited to the embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A system (100) for gas sensing and liquid level gauging for a tank (105) of a vessel, the system comprising:
a conduit (103) having at least one opening (104) arranged in the tank,
a liquid level gauging equipment (102) arranged to, when the system is in a liquid level gauging mode, fill the conduit with a gaseous media and determine a parameter indicating a pressure in the gaseous media in the conduit, and
a gas sensing equipment (101) arranged to, when the system is in a gas sensing mode, obtain a gas sample from the tank via the conduit and to sense at least one predetermined gas in the gas sample.

2. The system as defined in claim 1, wherein the system comprises means arranged to obtain information indicative of whether to operate the system in the liquid level gauging mode or in the gas sensing mode.

3. The system as defined in claim 2, wherein said means are arranged to:
receive an indication of when the liquid level in the tank falls below a threshold (110), the indication being based on the parameter determined by the liquid level gauging equipment, and
initiate operation of the system in the gas sensing mode a certain time period after the point in time when the liquid level in the tank falls below the threshold.

4. The system as defined in claim 2 or 3, wherein the means are arranged to:
receive information indicating that filling of the tank with liquid has started, and
initiate operation of the system in the liquid level gauging mode and/or disable operation of the system in the gas sensing mode based on the received information indicating that filling of the tank with liquid has started.

5. The system as defined in claim 2 or 3, wherein said means comprises a liquid sensor (109) arranged at a similar level as the opening of the conduit in the tank.

6. The system as defined in any one of the preceding claims, further comprising at least one computing module (107) configured to:
determine a liquid level in the tank based on the parameter determined by the liquid level gauging equipment, and
determine if the at least one predetermined gas is present in the tank based on the sensed at least one predetermined gas.

7. The system as defined in any one of the preceding claims, wherein the at least one opening of the conduit is arranged between 1 and 60 cm, preferably between 10 and 40 cm, such as around 20 to 25 cm from a bottom of the tank.

8. The system as defined in any one of the preceding claims, wherein the conduit is branched, each branch (404, 405, 406) having an opening (410, 411, 412) arranged in the tank.

9. The system as defined in claim 8, wherein the openings of the branched conduit are arranged on different distances from the bottom of the tank.

10. The system as defined in claim 8 or 9, wherein at least one (404) of the
branches is filled with gaseous media in the liquid level gauging mode and the other branch, or at least one of the other branches (405, 406), is used for obtaining the gas sample in the gas sensing mode.

11. A method (300) of gas sensing and liquid level gauging for a tank of a vessel, the method comprising:
filling (302) a conduit with a gaseous media, the conduit having at least one opening arranged in the tank,
determining (303) a parameter indicating a pressure in the gaseous media in the conduit,
obtaining (305) a gas sample from the tank via the conduit, and
sensing (306) at least one predetermined gas in the gas sample.

12. The method as defined in claim 11, further comprising:
obtaining (301) information indicative of whether to operate in a liquid level gauging mode or in a gas sensing mode, and
performing the filling of the conduit with the gaseous media and the determining of a parameter indicating the pressure in the gaseous media in the conduit if the information indicates operation in the liquid level gauging mode, and
performing the obtaining of the gas sample and the sensing of the at least one predetermined gas if the information indicates operation in the gas sensing mode.

13. The method as defined in claim 12, further comprising:
receiving (308) an indication of when the liquid level in the tank falls below a threshold, the indication being based on the determined parameter indicating a pressure in the gaseous media in the conduit, and
initiating (309) operation in the gas sensing mode a certain time period after the point in time when the liquid level in the tank falls below the threshold.

14. The method as defined in claim 12 or 13, further comprising:
receiving (310) information indicating that filling of the tank with liquid has started, and
initiating (311) operation in the liquid level gauging mode and/or disable operation in the gas sensing mode based on the received information indicating that filling of the tank with liquid has started.

15. The method as defined in any one of claims 11 to 14, further comprising:
determining (304) a liquid level in the tank based on the determined parameter indicating the pressure in the gaseous media in the conduit, and
determining (307) if the at least one predetermined gas is present in the tank based on the sensed at least one predetermined gas.
